Europäisches Patentamt

European Patent Office

Office européen des brevets

(11) Publication number: **0 436 473 A1**

# EUROPEAN PATENT APPLICATION

(21) Application number: 90830006.4

(22) Date of filing: 05.01.90

(51) Int. Cl.5: **G01N 21/59**

(43) Date of publication of application:
**10.07.91 Bulletin 91/28**

(84) Designated Contracting States:
**AT BE CH DE ES FR GB LI NL SE**

(71) Applicant: **T.E.M.E.CH. S.R.L.**

Via Peyron, 10
I-10100 Torino (To)(IT)

(72) Inventor: **Chiarella, Tommaso**
Via Nazzaro, 2
I-10143 Torino (TO)(IT)

(54) **Machine for the reading and determination degree of the opacity or trasparency of radiographic film.**

(57) A machine for the reading of the degree of opacity or transparency of radiographic film (20) in which one places, inside a box-shaped structure (10), a source (70) generating an analyzing light beam and a photo-receiving device (80) to convert the light impulses passing through the film (20) into variable voltage electrical impulses which are then sent to an electromechanic transducer in order to design a graphic display of the degree of opacity or transparency of the film (20) during the longitudinal and transversal scanning by the afore-mentioned light source (70) and photo-receiving device (80). The radiographic film (20) to be analyzed is placed on the machine's upper surface (18) which is made of a transparent material.

Fig. 1

# MACHINE FOR THE READING AND DETERMINATION DEGREE OF THE OPACITY OR TRASPARENCY OF RADIOGRAPHIC FILM

The object of this invention is a machine for the reading and the determination of the degree of opacity or transparency of radiographic film, since it can detect all possible cromatic variations on said film, by transforming such information into a graphic display which allows a detailed analysis that can also be useful as a means of comparison between different radiographic film.

Traditionally the reading of radiographic film, both in the medical-diagnostic field and in the material analysis field, is exclusively entrusted to the human eye which, as is common knowledge, cannot help losing a certain amount of information, no matter how well trained it is; this is due to the insufficient eye resolution ability which does not allow one to capture, for instance, all the gradations of greys on radiographic film, resulting in an incomplete and inadequate reading of the x-rays.

Therefore, this empirical method simply consists of placing the x-ray on a translucent material surface, for instance opaline, sufficiently lit so that the light diffused by the opaline surface may be distributed on the entire x-ray, thus permitting naked-eye analysis of the variations in the degree of transparency or opacity of the film in order to obtain useful information. The above method has proven to be rather inadequate for the obtaining of an immediate exact diagnosis, as well as for comparative analysis with a previously-analyzed x-ray.

The object of this invention is a machine for reading and determining the degree of opacity or transparency of radiographic x-rays, that allows one to avoid the above-described shortcomings.

This aim is reached with a machine for reading radiographic x-rays having the following characteristics:
- a box-like structure including a first external parallelepiped element which is partially without the upper wall and a second parallelepiped internal element having the upper wall made up of a translucent surface which supports above it, through the use of fixed supports, a transparent plate which is placed parallelly to said translucent surface. On this plate, the x-ray to be analyzed will be placed, being these translucent and transparent surfaces positioned by the opening produced in the above-mentioned first external parallellepiped element;
- a light source inserted inside the afore-mentioned second parallellepiped element for the illumination of the translucent surface and the transparent plate;
- a source generating a light beam for analyzing the x-ray; said source is brought in by a cursor which is able to move, following a linear trajectory, on a guide connected to the above-mentioned box-like structure between two of its sides;
- a photo-receiving device, brought in by another cursor, which is able to move following a linear trajectory on a second guide connected to said box-like structure parallelly and below the first-mentioned guide, in such a way that the source generating the light beam and the photo-receiving device are placed facing each other with the transparent material plate in between them;
- the means for transmitting motion generated by a micro- motor to the afore-mentioned first and second cursors;
- the means for transmitting orthogonal motion
- in relation to the motion followed by the cursors - to the first and second guides, said orthogonal motion being generated by another micro-motor;
- the means for piloting said first and second guides along the afore-mentioned orthogonal trajectory in relation to the trajectory followed by the cursors;
- a signal amplification circuit originating from the photo- receiving device, this signal being produced by converting the light impulses produced by the light sources into electrical impulses which will be sent to
- an electro-mechanic transducer which can reproduce graphically the impulses coming from the amplifier, designing a curve which represents the voltage intensity variations which are determined in turn by the quantity of light emitted from the source generating the analyzing light beam, which is able to go through the x-ray and therefore, in the end, the transparency variations in the x-ray during the cursors scannings;
- a micro-processor to manage said micro-motors by regulating the longitudinal and transversal scanning of the cursors and their guides;
- a key-board to control the micro-processor, built into said box-like structure.

The invention will be now described without restriction, with reference to the enclosed design tables in which:
figure 1 is a global perspective view, with parts removed for clarity, of a machine constructed according to the invention under consideration;
figure 2 is the side view in relief of figure 1;

figure 3 is the partial enlarged view of figure 1, having been cut away along the line II-II;

figure 4 is a block diagram illustrating the electrical circuit with which the above machine is equipped.

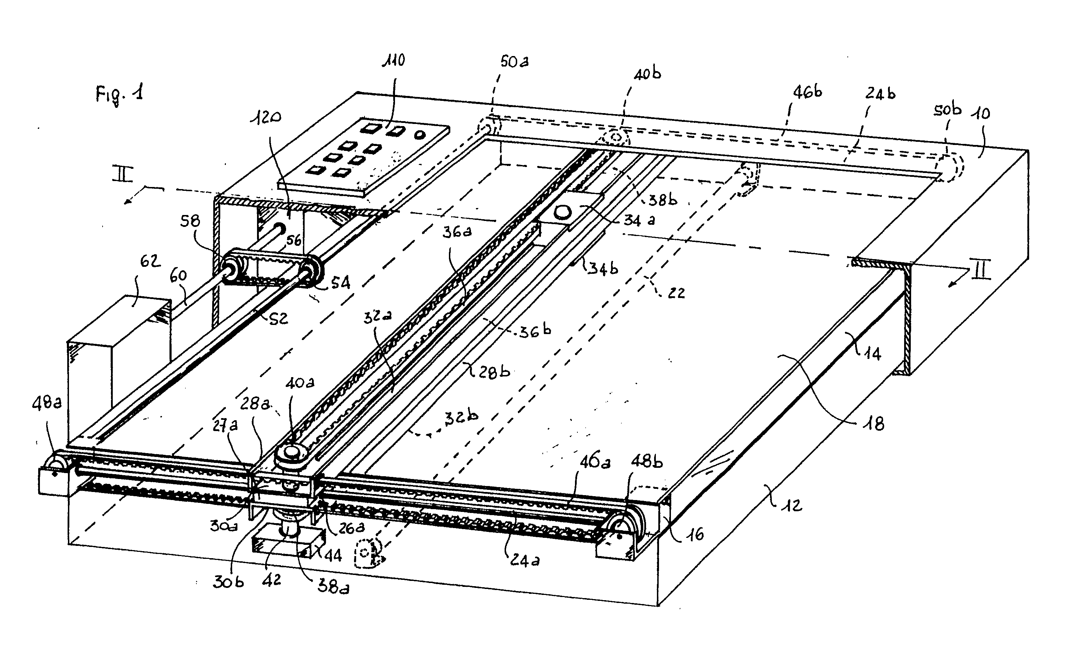

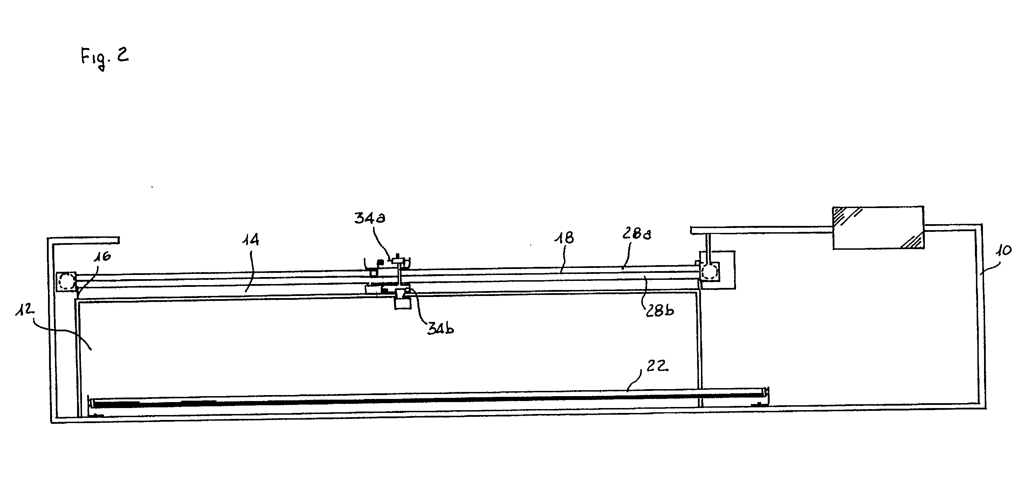

With particular reference to figure 1 and 2, an external box-like structure, produced with plastic or metallic material by hot molding or pressing, partially lacking its upper wall, is indicated by the number 10.

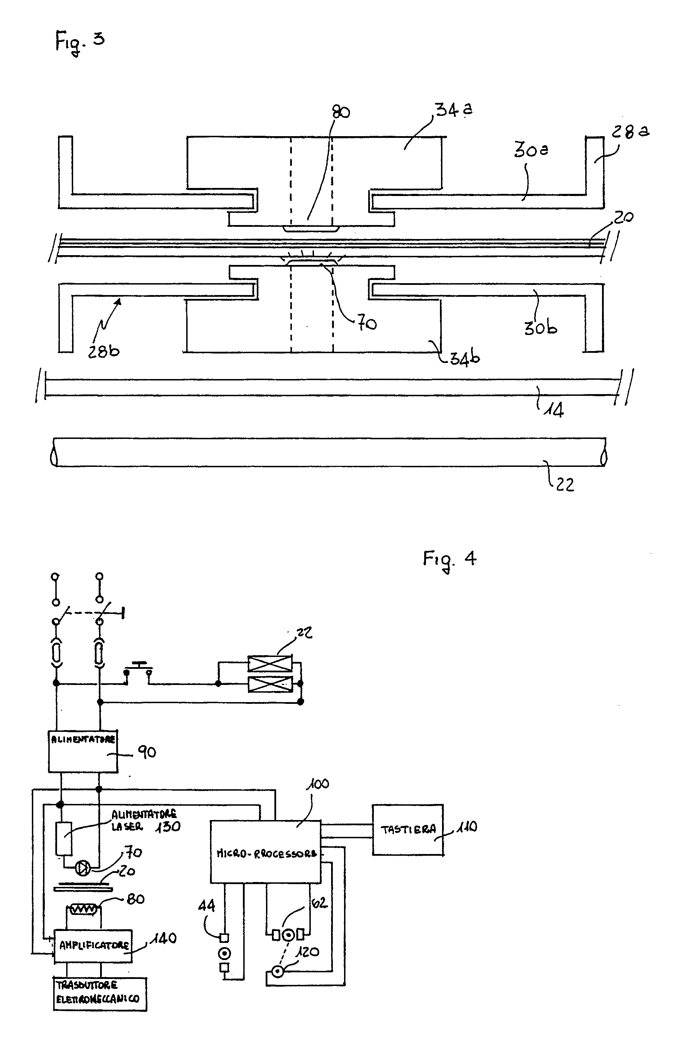

Within said structure # 10, another box-like structure # 12 is mounted by screws, whose upper wall is made up of a translucent surface, for example opaline. Said internal structure # 12 supports above it, by fixed mounts # 16 placed on its four corners, a transparent plate # 18, made up of, for instance, glass, which is to be placed parallely to the translucent surface # 14, being said translucent and transparent surfaces placed by the opening of the box-like external structure # 10. The x-ray # 20 to be analyzed will be placed on the transparent surface (see fig. 3).

At least one light source # 22 made up of a neon light, for example, will be mounted on the lower base of said external structure # 12; in this way, the light will be able to illuminate in a diffuse manner the opaline surface # 14 which is placed just above it, and consequently the x-ray # 20 resting on the glass plate # 18.

Two parallell bars # 24a and 24b, placed along two sides of the external structure # 12, are then connected to the above-mentioned fixed supports # 16. These two bars, 24a and 24b, respectively go through the ball bearings # 26a and 26b supported by the spacers # 27a and 27b onto which two parallel guides # 28a and 28b are mounted, being placed in a normal position in relation to said bars # 24a and 24b and extending from one spacer to the other, in a way to completely cross the glass surface # 18 - being placed one above and one below the glass surface.

These guides # 28a and 28b are both channel profiled, having the base walls # 30 and 30b facing each other, on which the slits # 32a and 32b are respectively made along their entire length.

A first cursor # 34a is connected to the upper guide # 34a, being freely inserted into slit # 32a (see Fig. 3 ), by means of two grooves made on the two side walls, which are engaged to the lateral edges of the slit #32a. In addition, the cursor # 34a carries a photo-receiving device # 80. A second cursor # 34b is also connected to the lower guide # 34b and carries a light source preferibly made up of a laser emitting device # 70. The laser device # 70 is placed next to and faces the photo-receiver # 80, and can generate a light beam which is able to analyze the x-ray # 20 placed on the glass plate # 18, between the above-mentioned devices # 70 and # 80, whose reciprocal function will be later described in more detail.

The cursors # 34a and 34b are able to move freely inside the slits # 32a and 32b, being respectively connected to the toothed belts # 36a and 36b, which are in turn respectively powered by the control pulleys # 38a and 38b and by the controlled pulleys 40a and 40b, placed in pairs on the extremities of the guides # 28a and 28b; furthermore the control pulleys #38a and 38b are both splined to the vertical shaft # 42 of a micro-electric motor #44. The above described power transmission allows the laser emmitter and photo-receiver devices controlled by the cursors to move along the guides # 28a and 28b, following an alternating rectilinear motion controlled by the above-mentioned micro-motor # 44 in order to be able to carry out a scanning along x-ray # 20 in a longitudinal direction. In turn, the said guides # 28a and 28b are able to freely move along the parallel bars # 24 a and 24 b, following, however, an orthogonal, rectilinear trajectory to the cursor's trajectory, being respectively connected to the toothed belts # 46a and 46b that parallely extend to the bars # 24a and 24b and are respectively moved by the controlled pulley pairs # 48a, 48b and 50a, 50b; the pulleys # 48a and 50a are connected and are moved by a shaft # 52 on which another pulley # 54, which rotates thanks to pulley # 56, is splined; pulley # 56 is in turn powered by the control pulley # 58, which in the end gets its power from a shaft # 60 of the electric micro-motor #62.

The above-described motion transmission to guides # 28a and 28b allows these guides, which are as already stated connected to one another by means of spacers # 27a and 27b, to carry out at the same time a rectilinear motion orthogonally to the motion of cursors # 34a and 34b, thus allowing the laser emitting device # 70 and the photo-receiver device # 80 to carry out a scanning along x-ray # 20 in a transversal direction.

From the above description it is clear that the combination of the afore-mentioned longitudinal and transversal movements of the laser-emitting and photo-receiving devices allow the anlysis, at whatever point, of the x-ray 20 placed between the two devices. The aim of this analysis is to determine the degree of opacity or transparency of the x-ray; this analysis is carried out with the help of an electric circuit placed down current, which is described in detail here below.

As already mentioned, the x-ray 20 is placed between the laser-emitting device # 70 and the photo-receiving device # 80 on a glass plate # 18 illuminated by a neon light diffused thanks to the opaline # 14. Such x-ray, being struck by the analyzing laser beam, will allow a certain quantity of light to go through it, with an intensity proportional to the degree of transparency or opacity of the x-ray. The laser light, thus modulated, will then be picked up by the photo-receiving device # 80 which is at the top of a circuit which is made up of a feeder # 90, which can supply stabilized and rectified voltage, for example 12V CC, and has the function of feeding a micro-processor # 100, equipped with a control and programming keyboard # 110, respectively for the management of the micro-motor # 44 and micro-motor # 62. The latter is in turn mechanically connected, through shaft # 60, to an encoder # 120 which constantly records the motor's # 62 number of revolutions and sends these messages to the micro- processor # 100, by means of which the desired cursors' # 34a and 34b route will have been previously programmed, in order to have such cursors carry out a transversal scanning of a certain length. Upon the completion of the scanning, the micro-processor will be able to have the cursors return to the original position. In addition there are some end-of the run micro-switches to avoid damages to the machine in case of malfunctioning of the micro-processor.

The feeder # 20 also supplies voltage to another feeder # 130 which represents the voltage source for the laser emitter # 70 which in turn is optically paired with the photo-receiver # 80 that can generate a train of electrical signals having a voltage proportional to the quantity of light picked up by the photo-receiver itself; these signals are sent to an amplifier # 140, which is also fed by the feeder # 90, which in turn sends them to an electromechanic transducer, of a well-known type, which will trace, on millimetric paper, a graph to visualize the voltage variations recorded by the photo-receiver # 80, paired up with the laser source # 70; the voltage variations are in turn, as is apparent, dependent on a higher or lower quantity of light passing through the x- ray and therefore, in the end, on the different degrees of transparency or opacity of the x-ray.

A laser emitter was chosen as a source for the analyzing light beam, since it has the advantage of producing a beam characterized by its monochromatism, a wave length which is not interfered with by visible light, i.e. outside light or the neon lights which the machine is equipped with, and to propagate itself in a rectilinear way, thus avoiding any focusing problems. In addition this laser beam has been chosen with a diameter between .05 and .30 mm and preferably equal to .12 mm, thus being practically punctiform and having a very high resolution power, but at the same time not being to small to record the x-ray "granadella" which has to be analyzed.

This chosen laser beam allows in this manner to record all the chromatic variations present on the x-ray with an extremely high-resolution power, and to change them, thanks to the electromeccanical transducer, into a graph which can quantitatively represent them. Furthermore this transducer can, as is common knowledge, vary its amplification sensitivity to the in-coming signal, originating from the photo-receiver, in order to greatly increase the peaks relative to variations, even minimal, of the in-coming voltage; it is also possible to vary its scrolling speed on paper, in order for every oscillation to be neatly paced and separate. Such a graph allows for a better qualitative analysis of the x-ray, at the same time obtaining a quantitative analysis which is extremely useful both for medical diagnoses and material testing in general.

**Claims**

1. Machine for the reading and the determination of the degree of opacity or transparency of x-rays, characterized by:
   - a box-like structure including a first external parallelepiped element, which is partially lacking its upper wall, and a second internal parallelepiped element, having the upper wall made up of a translucent surface, which supports above it, by means of fixed mounts, a transparent plate on which the x-ray to be analyzed will be resting, placed parallelly to the translucent surface; these translucent and transparent surfaces are placed next to each other with an opening in the first external parallelepiped element;
   - a light source inserted inside the second parallelepiped element to illuminate the translucent surface and the transparent plate;
   - a source generating an analyzing light beam for the x-ray; this source is brought in by a cursor which can move, following a linear trajectory, on a guide connected to the box-like structure, between its two sides;
   - a photo-receiving device, brought in by another cursor, which can move following a linear trajectory on a second guide connected to the box-like structure, parallelly and below the first guide, in such a way that the source generating the light beam and the photo-receiving device face each other, having the transparent material plate in between them;
   - means for the transmission of the motion generated by a micro-motor to the first and second cursor;
   - means for transmitting an orthogonal motion, in relation to the motion followed by the cursors, to the first and second guides, this orthogonal motion being generated by another micro-motor;

- means for piloting the first and second guides along the above-mentioned orthogonal trajectory in relation to the trajectory followed by the cursors;

- a circuit for the amplification of the exiting signal originated from the photo-receiving device, such signal being produced by converting the light impulses produced by the light sourse into electrical impulses which will be sent to

- an electromechanical transducer which can graphically reproduce the impulses coming out of the amplifier, by drawing a curve which represents the voltage intensity variations, which are in turn determined by the quantity of light, emitted by the source generating the analyzing light beam, which is able to go through the x-ray and therefore, in the end, the transparency variations in the x-ray during the cursors' scanning;

- a micro-processor to manage the micro-motors, by regulating the cursors' and guides' longitudinal and transversal scanning;

- a control keyboard for the micro-processor, incorporated in the box-like structure.

2. A machine, according to claim # 1, characterized by the fact that the afore-mentioned light source inserted inside the second parallelepiped element is a neon light.

3. a machine, according to claim # 1, characterized by the fact that said source generating an analyzing light beam for the x-ray is a laser emitter that produces a light beam having a diameter between .05 and .30 mm.

4. A machine, according to claim # 3, characterized by the fact that said laser light beam has a diameter equal to .12 mm.

5. A machine, according to claim # 1, characterized by the fact that the guides on which the first and second cursors slide are channeled and slits are made on the base walls for their entire length.

6. A machine, according to claim # 1, characterized by the fact that the first and second cursors are connected to the first and second guides, being freely inserted in said slits by means of grooves produced in their lateral walls which are engaged with the lateral edges of the slits.

7. A machine, according to claim # 1, characterized by the fact that the means for transmitting movement to the first and second cursors are made up of toothed belts and pulley pairs, the control ones being splined to the vertical shaft of a micro-motor.

8. A machine, according to claim # 1, characterized by the fact that the means for transmitting an orthogonal motion, in relation to the cursors' motion, to the first and second guides are made up of toothed belts and pulley pairs which get their energy by a shaft being in turn powered by a toothed belt and another pulley pair, the control one being splined on the shaft of a micro-motor.

9. A machine, according to claim # 1, characterized by the fact that the above-mentioned means for piloting the first and second guides along the orthogonal trajectory in relation to the cursors' trajectory, are made up of bars passing through ball bearings carried by spacers to which the extremities of said parallel guides are mounted.

Fig. 1

EP 0 436 473 A1

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | US-A-3 478 453 (R.H. BRODSKIJ) * Column 1, lines 22-53,19-51; column 3, lines 1-27,48-63; column 4, lines 51-62; figures 1,3,5 * | 1,2 | G 01 N 21/59 |
| A | US-A-3 614 241 (L.C. SANFORD et al.) * Figure 1; column 2, lines 46-61,70-72 * | 1 | |
| A | US-A-3 339 076 (S.R. HILAL) * Column 1, lines 6-15; column 2, lines 5-9,16-46,60-64; figures 1-3 * | 1 | |
| A | IBM TECHNICAL DISCLOSURE BULLETIN, vol. 12, no. 2, July 1969, pages 276-277, New York, US; R.F. ABRAMSON: "Scanning registration densitometer" * Whole document * | 1 | |
| A | GB-A-1 280 908 (KONISHIROKU PHOTO INDUSTRY CO.) | | TECHNICAL FIELDS SEARCHED (Int. Cl.5) G 01 N G 03 B |

The present search report has been drawn up for all claims

| Place of search | Date of completion of the search | Examiner |
|---|---|---|
| THE HAGUE | 31-08-1990 | HOCQUET A.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)